# EUROPEAN PATENT APPLICATION

(11) **EP 4 509 211 A1**
(43) Date of publication of application: **19.02.2025**
(21) Application number: 22937512.6
(22) Date of filing: 12.09.2022
(51) Int. Cl.: B01J 20/24, A01K 1/015, B01J 20/10, B01J 20/14, B01J 20/30

(54) **WATER ABSORPTION TREATMENT MATERIAL AND METHOD FOR PRODUCING SAME**

(30) Priority: 15.04.2022 JP 2022067265
(71) Applicant: Daiki Co., Ltd., Tokyo 102-0072 (JP)
(72) Inventor: YOSHINAGA, Junji, Tokyo 102-0072 (JP)
(74) Representative: Müller-Boré & Partner Patentanwälte PartG mbB
(86) International application number: PCT/JP2022/034011
(87) International publication number: WO 2023/199537

(57) **Abstract**

Provided are a water absorption treatment material in which a malodor is unlikely to drift around, and a method for manufacturing the same. A water absorption treatment material (1) is a water absorption treatment material that absorbs liquid containing a malodorous substance. The water absorption treatment material (1) includes a grain (10). The grain (10) has a water absorbing property. The grain (10) contains papers, silica gel, and diatomaceous earth as three major materials.

## Description

### Technical Field

The present invention relates to a water absorption treatment material that absorbs liquid containing a malodorous substance, and a method for manufacturing the same.

### Background Art

A conventional water absorption treatment material is disclosed, for example, in Patent Document 1. The water absorption treatment material disclosed in Patent Document 1 is an animal excrement treatment material, and includes a plurality of grains having a water absorbing property. This water absorption treatment material is used in a state in which the plurality of grains are laid in an animal toilet. Excrement excreted in the animal toilet is absorbed by the grains.

### Citation List

### Patent Document

Patent Document 1: JP 2015-97996 A

### Summary of Invention

### Technical Problem

By making the grains absorb excrement in this way, a malodor (ammonia odor etc.) of excrement can be confined inside the grains to some extent. However, excrement that is once absorbed inside the grains sometimes exudes to the surface of the grains as time passes in the conventional water absorption treatment material. This causes the malodor of excrement to drift around the water absorption treatment material.

The present invention has been made in view of the above-described problem, and it is an object thereof to provide a water absorption treatment material in which a malodor is unlikely to drift around, and a method for manufacturing the same.

### Solution to Problem

A water absorption treatment material according to the present invention is a water absorption treatment material that absorbs liquid containing a malodorous substance, the water absorption treatment material including: a grain having a water absorbing property, wherein the grain contains papers, silica gel, and diatomaceous earth as three major materials.

In this water absorption treatment material, the grain is provided that contains papers, silica gel, and diatomaceous earth as three major materials. The three major materials account for top three weight ratios in the grain, out of materials constituting the grain. Silica gel and diatomaceous earth are porous materials having a large number of pores. For this reason, excrement absorbed by the grain can be adsorbed in the pores of silica gel and diatomaceous earth. Thus, the excrement becomes less likely to exude to the surface of the grain.

A method for manufacturing a water absorption treatment material according to the present invention is a method for manufacturing a water absorption treatment material that absorbs liquid containing a malodorous substance, the method including: a grain forming step of forming a grain having a water absorbing property, wherein in the grain forming step, the grain is formed that contains papers, silica gel, and diatomaceous earth as three major materials.

In this manufacturing method, the grain is formed that contains papers, silica gel, and diatomaceous earth as three major materials. Silica gel and diatomaceous earth are porous materials having a large number of pores. For this reason, in the manufactured water absorption treatment material, excrement absorbed by the grain can be adsorbed in the pores of silica gel and diatomaceous earth. Thus, the excrement becomes less likely to exude to the surface of the grain.

### Advantageous Effects of Invention

According to the present invention, it is possible to implement a water absorption treatment material in which a malodor is unlikely to drift around, and a method for manufacturing the same.

### Brief Description of Drawings

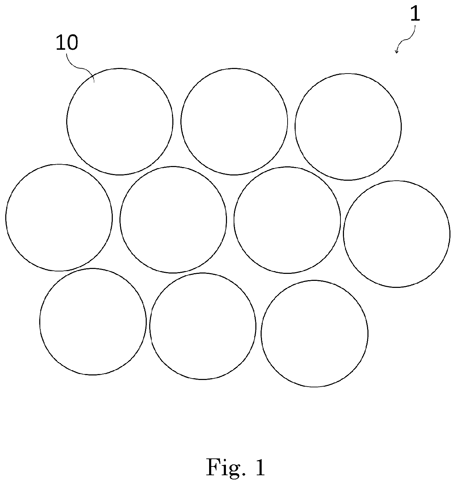

FIG. 1 is a schematic view showing an embodiment of a water absorption treatment material according to the present invention.

### Description of Embodiments

Hereinafter, an embodiment of the present invention will be described in detail with reference to the drawings. In the description of the drawings, the same elements are given the same reference numerals, and a redundant description will be omitted.

FIG. 1 is a schematic view showing an embodiment of a water absorption treatment material according to the present invention. A water absorption treatment material 1 is a water absorption treatment material that absorbs liquid containing a malodorous substance. The water absorption treatment material 1 is an animal excrement treatment material that absorbs excrement (mainly urine) of animals such as cats or dogs. The water absorption treatment material 1 includes a grain 10. The water absorption treatment material 1 is used, for example, in a state in which a plurality of the grains 10 are laid in a box-shaped toilet.

The grain 10 has a water absorbing property, and absorbs liquid to be treated. That is, the grain 10 takes the liquid in the inside thereof and retains it. The grain 10 having the water absorbing property requires the water absorption rate of 40 % or more measured by the following test. First, approximate 50 grams of the grains 10 (sample) are placed in a sieve with the inner diameter of 10 cm and the mesh size of 1 mm. An empty beaker is set under the sieve. Then, 30 ml of water is dripped on the sample over 10 seconds using a syringe with the inner diameter of its outer cylinder of 3 cm and the inner diameter of its cylinder tip of 4 mm (60 ml syringe manufactured by Terumo Corp.). After waiting 1 minute, the quantity of the water in the beaker is measured. The ratio of the value obtained by subtracting the measured water quantity from the quantity of the dripped water (30 ml) with respect to the quantity of the dripped water shall be the water absorption rate. That is, if the water quantity in the beaker is 18 ml or less, the water absorption rate is 40 % or more, and therefore the grain 10 is found to have the water absorbing property.

The grain 10 has a granular shape. Examples of the granular shape include a sphere, column, and ellipsoid. The grain 10 is composed of an uncovered granule. The particle diameter of each grain 10 is, for example, between 5 mm and 20 mm inclusive. As used herein, the particle diameter of the grain 10 is defined as the diameter of the minimum sphere that can include the grain 10.

The grain 10 contains papers, silica gel, and diatomaceous earth as three major materials. As used herein, the three major materials refer to materials that account for top three weight ratios in the grain 10, out of materials constituting the grain 10. The weight ratios of the papers, the silica gel, and the diatomaceous earth with respect to the grain 10 are each preferably 10 % or more, and more preferably 20 % or more. Also, the total weight ratio of the three major materials (papers, silica gel, and diatomaceous earth) with respect to the grain 10 is preferably 80 % or more, and more preferably 90 % or more. In a case where the grain 10 contains a material other than papers, silica gel, or diatomaceous earth, the weight ratio of the material must be smaller than the weight ratio of each of the papers, the silica gel, and diatomaceous earth.

The papers refer to a material composed mainly of pulp. Examples of the papers include, in addition to ordinary paper (paper powder), a vinyl chloride wallpaper classified product (paper obtained by classifying vinyl chloride wallpaper), fluff pulp, papermaking sludge, and pulp sludge. In the present embodiment, the papers are a main material of the grain 10. As used herein, the main material of the grain 10 refers to a material that accounts for the largest weight ratio in the grain 10, out of materials constituting the grain 10. Therefore, the main material is included in the three major materials naturally. The weight ratio of the papers with respect to the grain 10 is preferably 50 % or more.

The weight ratio of the silica gel with respect to the grain 10 may be equal to or larger than the weight ratio of the diatomaceous earth with respect to the grain 10, or may be smaller than the weight ratio of the diatomaceous earth. The silica gel is preferably A-type silica gel. For example, the weight ratios of the papers, the silica gel, and diatomaceous earth are, respectively, between 34 % and 90 % inclusive (preferably between 50 % and 70 % inclusive), between 5 % and 40 % inclusive (preferably between 10 % and 30 % inclusive), and between 5 % and 40 % inclusive (preferably between 10 % and 30 % inclusive). For example, as in a case where the weight ratios of the papers, the silica gel, and diatomaceous earth are, respectively, 60 %, 40 %, and 40 %, the weight ratios of the papers, the silica gel, and diatomaceous earth are not necessarily mutually different, and may be equal to each other as long as these materials are the three major materials.

It is preferable that the grain 10 consists essentially of the papers, the silica gel, and diatomaceous earth. The phrase "consisting essentially of the papers, the silica gel, and diatomaceous earth" means that another material such as coloring matter, or perfume may be added to the grain 10 unless the function of the grain 10 is inhibited. Even in that case, it is preferable that the weight ratio of the other material with respect to the grain 10 is 1 % or less (namely, the total weight ratio of the papers, the silica gel, and diatomaceous earth is 99 % or more).

The grain 10 may or may not contain an adhesive material. Examples of the adhesive material include a water-absorbent polymer, starch, CMC (carboxymethyl cellulose), PVA (polyvinyl alcohol), and dextrin. As the water-absorbent polymer, for example, an acrylic water-absorbent polymer such as sodium polyacrylate can be used.

Next, an example of a method for manufacturing the water absorption treatment material 1 will be described as an embodiment of a method for manufacturing a water absorption treatment material according to the present invention. This manufacturing method includes a grain forming step.

The grain forming step is a step of forming the grain 10. In the grain forming step, a granule that will serve as the grain 10 is formed by granulating a granulating material (materials constituting the grain 10) with a granulation apparatus. The granulating material contains papers, silica gel, and diatomaceous earth as three major materials. As the granulation apparatus, for example, an extrusion granulator can be used. Prior to the granulation, pretreatment such as pulverization, kneading, and adding water is performed on the granulating material as needed. After the granulation, posttreatment such as sieving (sizing), and drying is performed as needed. Note that the above-described granule is not covered in the grain forming step. Accordingly, the water absorption material 1 is obtained that is composed of the plurality of grains 10.

Effects of the present embodiment will be described. In the present embodiment, the grain 10 is formed that contains papers, silica gel, and diatomaceous earth as three major materials. Silica gel and diatomaceous earth are porous materials having a large number of pores. For this reason, excrement absorbed by the grain 10 can be adsorbed in the pores of silica gel and diatomaceous earth. Thus, the excrement becomes less likely to exude to the surface of the grain 10. Accordingly, the water absorption treatment material 1 in which a malodor of excrement is unlikely to drift around, and a method for manufacturing the same are implemented.

Since excrement is unlikely to exude in the grain 10 even after time passes in this way, the grain 10 is suitable for being used repeatedly over a long period of time. Thus, the frequency of replacing the grain 10 is reduced, and it is therefore possible to improve convenience for the users (owners of an animal etc.).

Incidentally, silica gel has a stronger adsorption power than diatomaceous earth, whereas diatomaceous earth has a higher adsorption velocity than silica gel. Therefore, by making the grain 10 contain both silica gel and diatomaceous earth as the three major materials, both act complementarily, and excrement (and its malodor) can be adsorbed strongly and rapidly. From this viewpoint, the weight ratios of the silica gel, and the diatomaceous earth with respect to the grain 10 are each preferably 10 % or more, and more preferably 20 % or more.

In the case where the weight ratio of the silica gel with respect to the grain 10 is equal to or larger than the weight ratio of the diatomaceous earth, it is advantageous for strengthening the adsorption power to excrement. On the other hand, in the case where the weight ratio of the silica gel with respect to the grain 10 is smaller than the weight ratio of the diatomaceous earth, namely in the case where the weight ratio of the diatomaceous earth is larger than the weight ratio of the silica gel, it is advantageous for heightening the adsorption velocity to excrement.

In the case where A-type silica gel is used as the silica gel contained in the grain 10, it is particularly advantageous for strengthening the adsorption power to excrement because chemical adsorption becomes superior to physical adsorption. However, the silica gel contained in the grain 10 may be B-type silica gel.

The grain 10 contains papers as its main material. Papers are fibrous materials. For this reason, using papers as a main material makes it easier to granulate the granulating material stably. From the viewpoint of improving a granulation property in this way, the weight ratio of the papers with respect to the grain 10 is preferably 50 % or more.

In the case where the grain 10 does not contain an adhesive material, stickiness of the surface of the grain 10 can be restrained. Thus, the grain 10 becomes less likely to adhere to the foot of an animal during excretion. There is a problem that the grains 10 adhering to the foot of an animal are scattered outside a toilet after excretion. Restraining stickiness of the surface of the grain 10 can make the problem unlikely to occur.

The grain 10 is composed of an uncovered granule. Thus, the manufacturing cost of the water absorption treatment material 1 can be reduced, because neither a coating material (material used for covering a granule) nor a coating step (step of covering a granule with a coating material) is required. However, the grain 10 may be composed of a granule, the surface of which is entirely or partially covered.

In the case where the grain 10 consists essentially of the papers, the silica gel, and diatomaceous earth, it is advantageous for implementing the grain 10 that can adsorb excrement strongly and rapidly while securing an excellent granulation property.

The present invention is not limited to the above-described embodiment, and various modifications can be made. In the above-described embodiment, an example is given in which the main material of the grain 10 is papers. However, the main material of the grain 10 may be silica gel. In that case, the weight ratio of the papers with respect to the grain 10 may be equal to or larger than the weight ratio of the diatomaceous earth with respect to the grain 10, or may be smaller than the weight ratio of the diatomaceous earth. Using silica gel as the main material in this way can particularly strengthen the adsorption power to excrement.

Also, the main material of the grain 10 may be diatomaceous earth. In that case, the weight ratio of the papers with respect to the grain 10 may be equal to or larger than the weight ratio of the silica gel with respect to the grain 10, or may be smaller than the weight ratio of the silica gel. Using diatomaceous earth as the main material in this way can particularly heighten the adsorption velocity to excrement.

In the above-described embodiment, an example is given in which the water absorption treatment material 1 is an animal excrement treatment material. However, the water absorption treatment material 1 may be a human excrement treatment material that absorbs excrement of humans. Alternatively, the water absorption treatment material 1 may be a vomited matter treatment material that absorbs vomited matter, or a food waste treatment material that absorbs food waste (moisture contained in the food waste).

### List of Reference Numerals

- 1: Water Absorption Treatment Material
- 10: Grain

## Claims

1. A water absorption treatment material that absorbs liquid containing a malodorous substance, the water absorption treatment material comprising:
a grain having a water absorbing property,
wherein the grain contains papers, silica gel, and diatomaceous earth as three major materials.

2. The water absorption treatment material according to claim 1,
wherein weight ratios of the papers, the silica gel, and the diatomaceous earth with respect to the grain are each 10 % or more.

3. The water absorption treatment material according to claim 1 or 2, wherein the papers are a main material of the grain.

4. The water absorption treatment material according to claim 3,
wherein a weight ratio of the papers with respect to the grain is 50 % or more.

5. The water absorption treatment material according to claim 3,
wherein a weight ratio of the silica gel with respect to the grain is equal to or larger than a weight ratio of the diatomaceous earth with respect to the grain.

6. The water absorption treatment material according to claim 3,
wherein a weight ratio of the silica gel with respect to the grain is smaller than a weight ratio of the diatomaceous earth with respect to the grain.

7. The water absorption treatment material according to claim 1 or 2, wherein the silica gel is a main material of the grain.

8. The water absorption treatment material according to claim 1 or 2, wherein the diatomaceous earth is a main material of the grain.

9. The water absorption treatment material according to claim 1 or 2, wherein the silica gel is A-type silica gel.

10. The water absorption treatment material according to claim 1 or 2, wherein the grain does not contain an adhesive material.

11. The water absorption treatment material according to claim 1 or 2, wherein the grain is composed of an uncovered granule.

12. The water absorption treatment material according to claim 1 or 2,
wherein the grain consists essentially of the papers, the silica gel, and the diatomaceous earth.

13. A method for manufacturing a water absorption treatment material that absorbs liquid containing a malodorous substance, the method comprising:
a grain forming step of forming a grain having a water absorbing property,
wherein in the grain forming step, the grain is formed that contains papers, silica gel, and diatomaceous earth as three major materials.

14. The method for manufacturing a water absorption treatment material according to claim 13,
wherein in the grain forming step, the grain is formed such that weight ratios of the papers, the silica gel, and the diatomaceous earth with respect to the grain are each 10 % or more.

15. The method for manufacturing a water absorption treatment material according to claim 13 or 14,
wherein in the grain forming step, the grain is formed that contains the papers as a main material.

16. The method for manufacturing a water absorption treatment material according to claim 15,
wherein in the grain forming step, the grain is formed such that a weight ratio of the papers with respect to the grain is 50 % or more.

17. The method for manufacturing a water absorption treatment material according to claim 15,
wherein in the grain forming step, the grain is formed such that a weight ratio of the silica gel with respect to the grain is equal to or larger than a weight ratio of the diatomaceous earth with respect to the grain.

18. The method for manufacturing a water absorption treatment material according to claim 15,
wherein in the grain forming step, the grain is formed such that a weight ratio of the silica gel with respect to the grain is smaller than a weight ratio of the diatomaceous earth with respect to the grain.

19. The method for manufacturing a water absorption treatment material according to claim 13 or 14,
wherein in the grain forming step, the grain is formed that contains the silica gel as a main material.

20. The method for manufacturing a water absorption treatment material according to claim 13 or 14,
wherein in the grain forming step, the grain is formed that contains the diatomaceous earth as a main material.

21. The method for manufacturing a water absorption treatment material according to claim 13 or 14,
wherein the silica gel is A-type silica gel.

22. The method for manufacturing a water absorption treatment material according to claim 13 or 14,
wherein in the grain forming step, the grain is formed that does not contain an adhesive material.

23. The method for manufacturing a water absorption treatment material according to claim 13 or 14,
wherein in the grain forming step, the grain is formed that is composed of an uncovered granule.

24. The method for manufacturing a water absorption treatment material according to claim 13 or 14,
wherein in the grain forming step, the grain is formed that consists essentially of the papers, the silica gel, and the diatomaceous earth.
